(19) Europäisches Patentamt

European Patent Office

Office européen des brevets

(11) **EP 3 044 697 B1**

(12) **FASCICULE DE BREVET EUROPEEN**

(45) Date de publication et mention de la délivrance du brevet:
**29.03.2023 Bulletin 2023/13**

(21) Numéro de dépôt: **14784277.7**

(22) Date de dépôt: **10.09.2014**

(51) Classification Internationale des Brevets (IPC):
**G01B 9/02002** *(2022.01)*  **G06F 17/10** *(2006.01)*
**G01J 9/02** *(2006.01)*  **G01B 9/02** *(2006.01)*

(52) Classification Coopérative des Brevets (CPC):
**G01J 9/02; G01B 9/02002; G01B 9/02041; G06F 17/10**

(86) Numéro de dépôt international:
**PCT/FR2014/052245**

(87) Numéro de publication internationale:
**WO 2015/036699 (19.03.2015 Gazette 2015/11)**

(54) **PROCÉDÉ ÉLECTRONIQUE D'EXTRACTION DE L'AMPLITUDE ET DE LA PHASE D'UN SIGNAL DANS UNE DÉTECTION SYNCHRONE ET MONTAGE INTERFÉROMÉTRIQUE POUR LA MISE EN OEUVRE DU PROCÉDÉ**

ELEKTRONISCHES VERFAHREN ZUR EXTRAKTION DER AMPLITUDE UND DER PHASE EINES SIGNALS IN EINER SYNCHRONEN DETEKTION UND INTERFEROMETRISCHE ANORDNUNG ZUR DURCHFÜHRUNG DES VERFAHRENS

ELECTRONIC METHOD FOR EXTRACTING THE AMPLITUDE AND THE PHASE OF A SIGNAL IN SYNCHRONOUS DETECTION AND INTERFEROMETRIC ASSEMBLY FOR IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2013 FR 1358723**

(43) Date de publication de la demande:
**20.07.2016 Bulletin 2016/29**

(73) Titulaire: **Université de Technologie de Troyes 10004 Troyes Cedex (FR)**

(72) Inventeurs:
 • **BRUYANT, Aurélien**
 **F-10000 Troyes (FR)**
 • **VAILLANT, Julien**
 **F-10300 Saint-Avine (FR)**
 • **AL MOHTAR, Abeer**
 **F-94400 Vitry-sur-seine (FR)**

(74) Mandataire: **Novagraaf Technologies Bâtiment O2 2, rue Sarah Bernhardt CS90017 92665 Asnières-sur-Seine Cedex (FR)**

(56) Documents cités:
**EP-A1- 1 770 714**

 • **THOMAS TAUBNER ET AL: "Effect of Tip Modulation on Image Contrast in Scattering-Type Near-Field Optical Microscopy", JOURNAL OF THE KOREAN PHYSICAL SOCIETY, vol. 47, août 2005 (2005-08), pages 213-216, XP055129636,**
 • **OCELIC NENAD ET AL: "Pseudoheterodyne detection for background-free near-field spectroscopy", APPLIED PHYSICS LETTERS, AMERICAN INSTITUTE OF PHYSICS, US, vol. 89, no. 10, 8 septembre 2006 (2006-09-08), pages 101124-101124, XP012085548, ISSN: 0003-6951, DOI: 10.1063/1.2348781**

- MARTIN SCHNELL ET AL: "Amplitude- and Phase-Resolved Near-Field Mapping of Infrared Antenna Modes by Transmission-Mode Scattering-Type Near-Field Microscopy +", JOURNAL OF PHYSICAL CHEMISTRY C, vol. 114, no. 16, 29 avril 2010 (2010-04-29), pages 7341-7345, XP055017843, ISSN: 1932-7447, DOI: 10.1021/jp909252z
- B. DEUTSCH ET AL: "Near-field amplitude and phase recovery using phase-shifting interferometry", OPTICS EXPRESS, vol. 16, no. 2, 2008, page 494, XP055126251, ISSN: 1094-4087, DOI: 10.1364/OE.16.000494
- Simon Rerucha ET AL: "Detection of Interference Phase by Digital Computation of Quadrature Signals in Homodyne Laser Interferometry", Sensors, vol. 12, no. 10, 19 October 2012 (2012-10-19), pages 14095-14112, XP055759370, DOI: 10.3390/s121014095
- A. AL MOHTAR ET AL: "Generalized lock-in detection for interferometry: application to phase sensitive spectroscopy and near-field nanoscopy", OPTICS EXPRESS, vol. 22, no. 18, 5 September 2014 (2014-09-05), page 22232, XP055759373, DOI: 10.1364/OE.22.022232

**Description**

**DOMAINE TECHNIQUE DE L'INVENTION**

L'invention se rapporte à l'extraction de l'amplitude et de la phase d'un signal modulé. Plus particulièrement, l'invention se rapporte à un procédé d'extraction de l'amplitude et de la phase d'un signal mélangé avec un signal modulé en phase selon une fonction de modulation périodique, typiquement sinusoïdale ou triangulaire. Cette invention concerne typiquement la mesure d'amplitude et de phase dans des montages interférométriques, notamment dans le domaine des capteurs optiques intégrés ou encore en microscopie optique résolue en phase.

**ETAT DE LA TECHNIQUE ANTERIEURE**

Les détections synchrones (DS) classiques sont des instruments électroniques très utilisés depuis longtemps [i] car ils permettent d'extraire très efficacement, en terme de rapport signal à bruit, l'amplitude $E_S$ et la phase $\phi_S$ d'un signal associé à une porteuse sinusoïdale de fréquence angulaire $\Omega$. Les détections synchrones sont employées lorsque le signal, dont on cherche à mesurer l'amplitude et la phase, est faible, voire très faible. En outre, dans le cas d'un signal fort, les détections synchrones constituent aussi une solution très pratique pour mesurer la phase $\phi_S$ (toujours dans le cas d'un signal associé à une porteuse sinusoïdale). Ces instruments sont appelés « Lock-in amplifier » en anglais.

Les détections synchrones sont constituées d'un détecteur homodyne suivi d'un intégrateur. Ils réalisent l'extraction du signal en multipliant d'abord le signal électrique détecté $I_{det}$ avec deux références sinusoïdales en quadrature (sinus et cosinus) ayant la même fréquence $\Omega$ que la porteuse. Le résultat de ce produit est intégré durant un temps $t_{int}$. En pratique, le signal électrique d'entrée de la DS, $I_{det}$, contient le signal modulé d'intérêt $I_{mod} = E_S \cos(\phi_S - \Omega t)$, et éventuellement d'autres signaux modulés à d'autres fréquences ainsi que du bruit. Les détections synchrones (DS) possèdent deux sorties délivrant deux signaux X et Y à partir desquels il est facile de remonter à $\phi_S$ (la phase) et à $E_S$ (l'amplitude). L'opération mathématique réalisée par une détection synchrone opérant sur $I_{det}$ à une fréquence de « référence » $\Omega$ s'écrit, pour chacune des deux sorties :

$$X_\Omega(I_{det}) \quad = \quad \frac{1}{\Omega t_{int}} \int_0^{\Omega t_{int}} I_{det} \cos(\Omega t)\, d(\Omega t) \qquad (1)$$

$$Y_\Omega(I_{det}) \quad = \quad \frac{1}{\Omega t_{int}} \int_0^{\Omega t_{int}} I_{det} \sin(\Omega t)\, d(\Omega t). \qquad (2)$$

La sortie X fournit un signal proportionnel à $E_S*\cos(\phi_S)$ et la sortie Y fournit un signal identiquement proportionnel à $E_S*\sin(\phi_S)$, ce qui donne accès aux grandeurs recherchées.

Le fonctionnement des détections synchrones est largement documenté [ii]. En interférométrie, les DS trouvent leur application pour déterminer l'amplitude et la phase d'un signal optique interférant avec un signal optique de référence décalé en fréquence optique (dispositifs hétérodynes, utilisant des modulateurs acousto-optiques). En effet, ce mélange optique produit une intensité détectée variant sinusoïdalement à une fréquence angulaire $\Omega$, ce qui rend adéquat l'utilisation d'une DS.

Cependant, dans de nombreux cas pratiques, la porteuse présente dans $I_{det}$, bien que stationnaire, n'est pas purement sinusoïdale. Ce problème est particulièrement prégnant en interférométrie optique où, bien souvent, le signal lumineux à analyser interfère avec un signal lumineux dont la phase ou la fréquence optique est modulée non linéairement pour des raisons pratiques, à savoir : la vitesse de la modulation, l'amplitude de la modulation, les contraintes mécaniques, etc. Dans ce cas, l'intensité détectée est dispersée sur un ensemble de fréquences et non sur une seule. En raison de cette multitude de fréquences à analyser, une DS classique unique ne peut généralement pas être utilisée.

Le domaine des capteurs optiques interférométriques est particulièrement concerné par cette problématique, « Recovering Signals from Optical Optical Fiber Interferometric Sensors, by Charles B. Cameron, PhD thesis, 1991» [iii], pour la mesure optique de déplacement, de vibration. Le domaine de la microscopie optique mettant en oeuvre de l'interférométrie est aussi concerné par cette problématique, voir les articles [2,3,4]. Dans ces deux domaines, des méthodes plus ou moins efficaces sont mises en oeuvre pour contourner le problème de la porteuse non sinusoïdale ; c'est notamment le cas lorsqu'une méthode interférométrique dite « pseudo-hétérodyne » est employée [1,5,6,7]. Différentes approches ont donc été proposées. On pourra se référer aux articles [8,9] dans le domaine des capteurs à fibres optiques, et aux articles [3,4,10] pour la microscopie. Une méthode assez « naturelle » pour traiter le problème consiste à effectuer les deux opérations décrites par les équations (1-2) sur un nombre de fréquences suffisant et requiert donc des détections synchrones (DS) multiples. Cette approche, qualifiée ici de méthode à DS multiples (MDS), est décrite dans l'article « Pseudoheterodyne detection for background-free near-field spectroscopy, N. Ocelic, A. Huber, and R. Hillenbrand, " Appl. Phys. Lett. 89, 101124 (2006) » [3] ainsi que dans la demande internationale référencée [13]. Néanmoins, avec cette méthode, une partie du signal est perdue car le signal est réparti sur un grand nombre de fréquences, et il est difficile et coûteux d'employer une détection synchrone sur chacune d'entre elles. D'autres méthodes, plus ou moins complexes, peuvent être citées, voir les articles [11, 12]. Cependant, l'approche MDS reste utilisée car, non seulement les DS permettent de détecter de très faible signaux, mais de plus, elles permettent de discriminer le signal utile d'autres signaux parasites si le signal d'intérêt présente une modulation supplémentaire de son amplitude $E_s$ à une certaine fréquence connue.

## EXPOSE DE L'INVENTION

La présente invention permet d'étendre efficacement le champ d'application des détections synchrones à des signaux électriques modulés par une porteuse stationnaire non sinusoïdale déterminée, connue ou mesurée.

L'invention a pour but de remédier à des inconvénients de l'état de la technique et concerne plus particulièrement un procédé électronique d'extraction de l'amplitude $E_S$ et de la phase $\phi_S$ d'un signal électrique $I_{det}$ dans une détection synchrone, ledit signal électrique $I_{det}$ contenant une partie modulée $I_{mod}$ de la forme $I_{mod} \propto E_S f(t)*\cos(\phi_S - \phi_R(t))$, où $\phi_R(t)$ et $f(t)$ sont deux fonctions de modulation temporelles connues, comprenant les étapes suivantes :

- multiplier ledit signal électrique par deux signaux de référence $C(t)$ et $S(t)$ construits à partir des fonctions de modulation temporelles connues $\phi_R(t)$ et $f(t)$ ;

- intégrer les deux signaux résultant des deux multiplications définies à l'étape précédente durant un temps $t_{int}$,

- déterminer l'amplitude et la phase dudit signal à partir des grandeurs X et Y résultant des intégrations définies à l'étape précédente ;

le procédé est caractérisé en ce que :

- ledit signal électrique est multiplié par deux signaux de références orthogonaux $C(t)$ et $S(t)$ pouvant se décomposer sur le même ensemble de fréquences que celles présentes dans $I_{mod}$ à savoir : $C \propto \cos(\phi_R)*f(t)$ et $S \propto \sin(\phi_R)*f(t)$ ; que

- la fonction de modulation temporelle en amplitude considérée $f(t)$ est soit périodique de période $2\pi/\Omega_A$ durant le temps d'intégration $t_{int}$, où $\Omega_A$ est la fréquence angulaire ; soit constante durant le temps d'intégration $t_{int}$, que

- la fonction de modulation temporelle en phase $\phi_R(t)$ considérée est périodique durant le temps d'intégration $t_{int}$ de période $2\pi/\Omega$, où $\Omega$ est la fréquence ; et en ce que

- les grandeurs X et Y sont reliées à $Es*\cos(\phi_S)$ et $Es*\sin(\phi_S)$ par deux coefficients de proportionnalité déterminés analytiquement ou numériquement.

Particulièrement, les fonctions de modulation temporelles $\phi_R(t)$ et $f(t)$ connues sont utilisées pour produire les deux signaux de références permettant d'extraire l'amplitude et la phase du signal recherché de telle sorte qu'un rapport signal à bruit soit optimum.

Par 'optimum' on entend que tout le contenu spectral de $I_{mod}$ est exploité pour remonter à l'information d'amplitude et de phase. Le rapport signal à bruit est donc augmenté par rapport à un procédé d'extraction reposant sur l'emploi de multiples détections synchrones (MDS). Cette amélioration dépend de la forme de la fonction de modulation $\phi_R$ et notamment de son amplitude. La limite de détection (puissance équivalente de bruit) peut ainsi être diminuée d'environ 30% par rapport au cas où deux détections synchrones seraient mises en oeuvre dans le cas d'une fonction de modulation $\phi_R$ sinusoïdale d'amplitude faible. L'amélioration est bien supérieure si l'amplitude de la fonction de modulation est élevée.

Avantageusement, les fonctions de modulation temporelles $\phi_R$ et $f(t)$ connues sont utilisées pour produire les deux signaux de références permettant d'extraire l'amplitude et la phase du signal recherché de telle sorte qu'un rapport signal à bruit soit optimum.

Par ailleurs, ladite fonction de modulation temporelle $\phi_R$ connue est exacte, imposée ou mesurée.

Avantageusement, la fonction de modulation temporelle $\phi_R(t)$ connue est sinusoïdale.

En outre, la fonction de modulation temporelle $\phi_R(t)$ est triangulaire.

En particulier, la fonction de modulation triangulaire est symétrique ou encore asymétrique.

Avantageusement, la fonction de modulation périodique f(t) considérée est réduite à une seule composante sinusoïdale de période $2\pi/\Omega_A$, sans harmonique.

En outre, le signal $I_{det}$ ou/et les signaux de références C(t) et S(t) sont filtrés de leur composante continue ou de certaines composantes fréquentielles juste avant l'étape de multiplication.

L'invention concerne encore un montage interférométrique pour la mise en oeuvre du procédé d'extraction ci-dessus comprenant une source de lumière, un bras signal couplé optiquement avec la source de lumière à l'aide d'un premier miroir monté sur un premier cristal piézoélectrique pour recevoir la lumière à partir de ladite source de lumière ; un bras de référence couplé optiquement avec la source de lumière à l'aide d'un deuxième miroir monté sur un deuxième cristal piézoélectrique pour recevoir la lumière à partir de ladite source de lumière ; et une détection synchrone couplée optiquement auxdits bras signal et bras de référence pour détecter un signal électrique $I_{det}$ avec une amplitude $E_s$ et une phase $\phi_S$, ledit signal électrique $I_{det}$ contenant une partie modulée $I_{mod}$ de la forme $I_{mod} \Box E_S \ast f(t) \ast \cos(\phi_S - \phi_R(t))$, où $\phi_R(t)$ et f(t) sont deux fonctions de modulation temporelles connues, en ce que la détection synchrone (6) est configurée pour multiplier ledit signal électrique par deux signaux de référence C(t) et S(t), construits à partir desdites fonctions de modulation temporelles $\phi_R(t)$ et f(t) ; afin d'intégrer les deux signaux résultant desdites deux multiplications durant un temps $t_{int}$, et afin de déterminer l'amplitude et la phase dudit signal à partir des grandeurs X et Y résultant desdites intégrations.

De préférence, le montage interférométrique comprend en outre un microscope à sonde locale où la fréquence angulaire de modulation en amplitude $\Omega_A$ est une harmonique de la fréquence angulaire d'oscillation mécanique de la sonde locale.

Particulièrement, dans le montage interférométrique selon l'invention, la profondeur de modulation de $\phi_R(t)$ est choisie pour filtrer la contribution de certaines composantes modulées non désirées éventuellement présentes dans ledit signal, à la fréquence angulaire $\Omega_A$ et ses harmoniques.

Généralement, le montage interférométrique selon l'invention est apte à recueillir une information sur l'interaction locale existant entre la sonde locale et un échantillon.

L'invention concerne encore le montage interférométrique pour l'exécution du procédé d'extraction ci-dessus, à l'aide de composants analogiques, de cartes numériques ou à l'aide de solutions logicielles.

**BREVE DESCRIPTION DES FIGURES**

D'autres caractéristiques, détails et avantages de l'invention ressortiront à la lecture de la description qui suit, en référence aux figures annexées, qui illustrent :

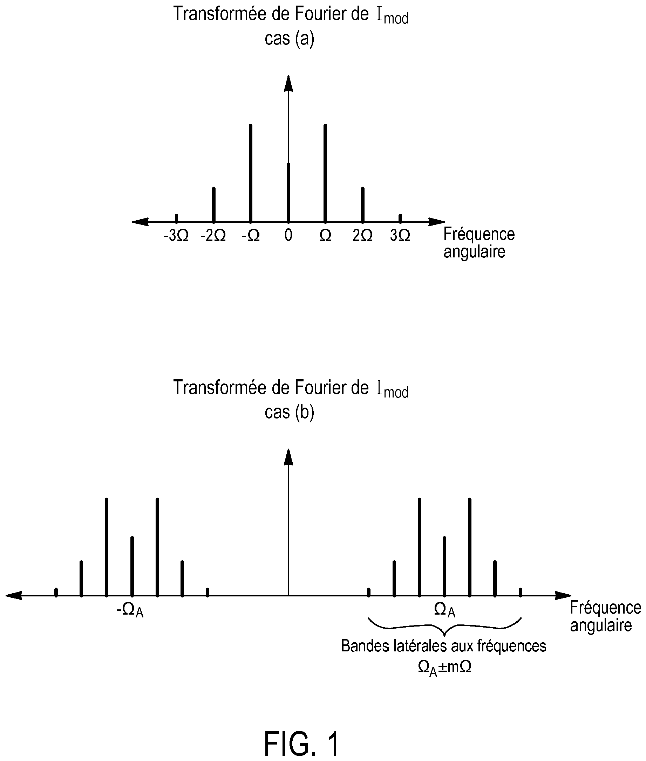

- la figure 1 illustre le contenu spectral de $I_{mod}$ dans les cas d'un signal de type a et de type b, dans le cas d'une fonction de modulation $\phi_R(t)$ périodique donnée de période $2\pi/\Omega$. Pour le signal de type b, f(t) est harmonique de période $2\pi/\Omega_A$ ;

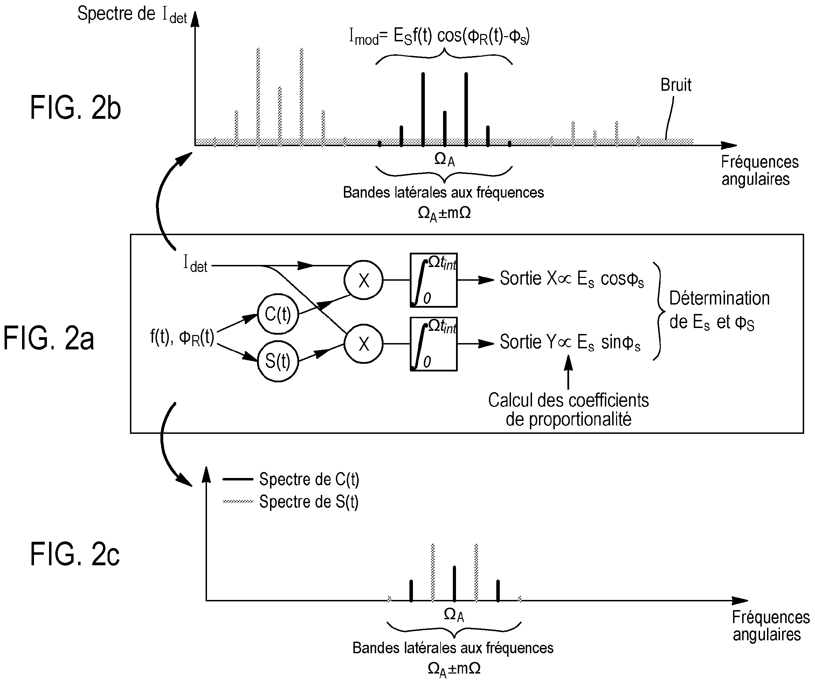

    - La figure 2 est une vue d'ensemble du procédé d'extraction : a) grandes étapes du procédé (objet de la présente invention), b) exemple schématique de spectre possible pour le signal $I_{det}$, ici dans le cas d'un signal caractérisé par une fonction f(t) sinusoïdale à la fréquence angulaire $\Omega_A$ c) exemple schématique de spectre possible pour les signaux de référence C(t) et S(t) ;

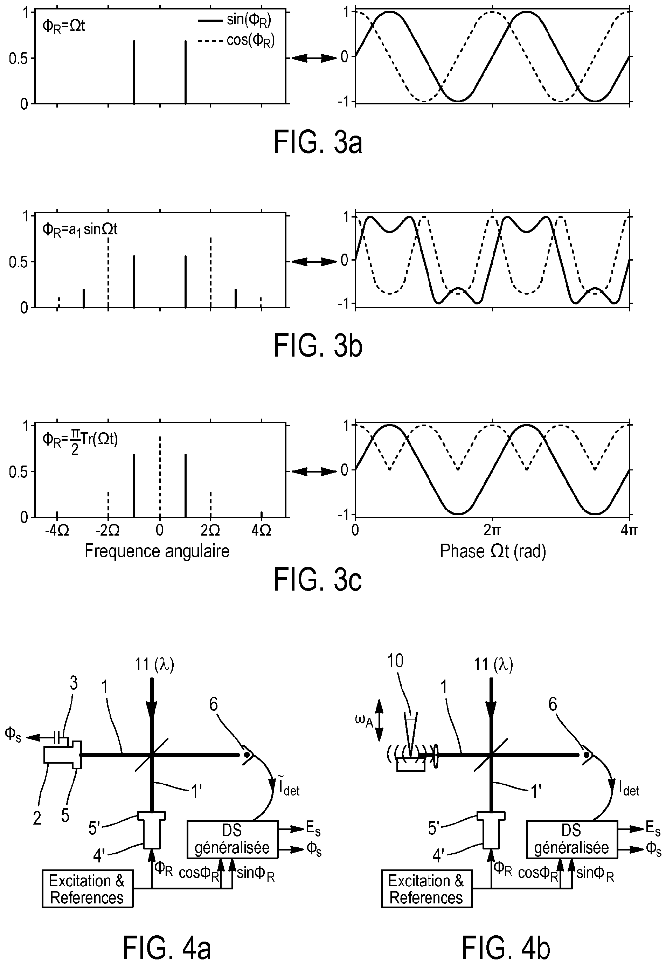

- la figure 3 montre des signaux de référence orthogonaux ($\cos\phi_R$, $\sin\phi_R$) et leur transformée de Fourier pour la modulation de phase sélectionnée $\phi_R$ (t) : (a) : dents de scie avec une amplitude $2\pi$ et (b) : sinusoïdale avec une profondeur de modulation $a_1$ correspondant au premier zéro de $J_0$, et (c) : triangulaire avec une amplitude de $\pi / 2$ radian ;
- la figure 4 illustre des dispositifs expérimentaux développés pour tester la technique de détection synchrone généralisée, objet de la présente invention. Un interféromètre de Michelson est utilisé suivant deux modalités : en (a), sans modulation d'amplitude, et, en (b), avec une modulation du signal dans le bras signal. Dans le second cas (b), l'interféromètre est couplé à un microscope de champ proche optique et les signaux f(t) et $\phi_R(t)$ sont utilisés pour construire C(t) et S(t) dans la DS généralisée ;

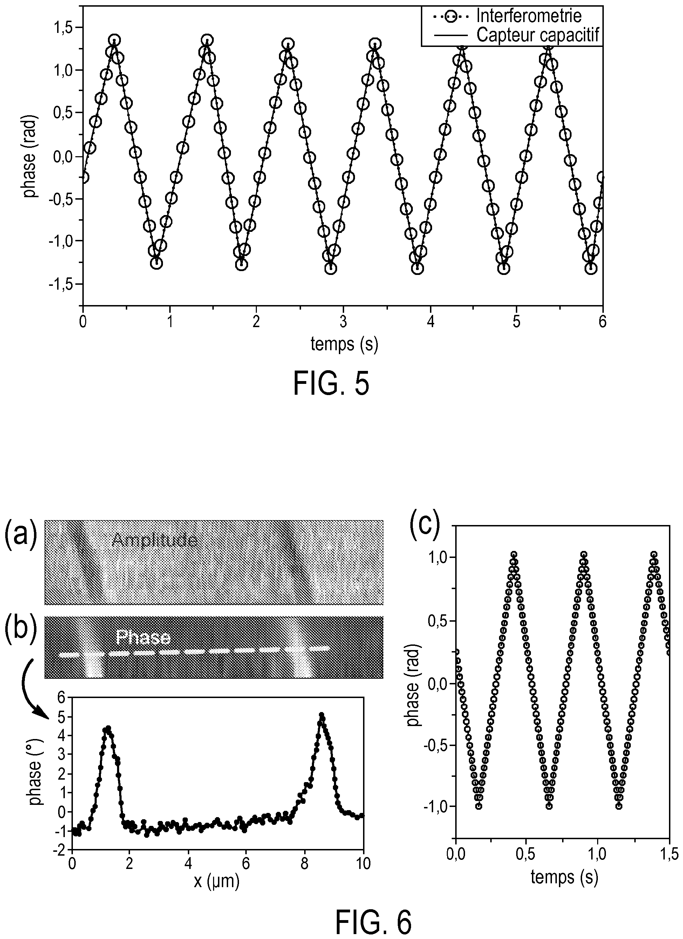

- la figure 5 montre un exemple de mesure de phase $\phi_S$ obtenue avec la configuration de la figure 4 (a), avec une vibration sinusoïdale du miroir de référence et donc de $\phi_R$. La phase du champ signal $\phi_S$ suit une fonction triangulaire contrôlée par des capteurs capacitifs (trait épais). La mesure interférométrique simultanée obtenue avec un temps d'intégration $t_{int}$ de 0,05 s est marquée par des cercles ;
- la figure 6 montre une mesure d'amplitude Es et de phase $\phi_R$ obtenue avec le dispositif de la figure 4(b). 5(a) représente l'amplitude et 5(b) représente la phase du champ du signal diffusé par la nano-sonde sur des lignes de cuivre, apparaissant sous forme de lignes sombres sur l'image d'amplitude. 5(c) représente la phase enregistrée lors d'une modulation de phase triangulaire de l'ordre de 0,1 rad ajoutée dans le bras signal, modulé en amplitude;

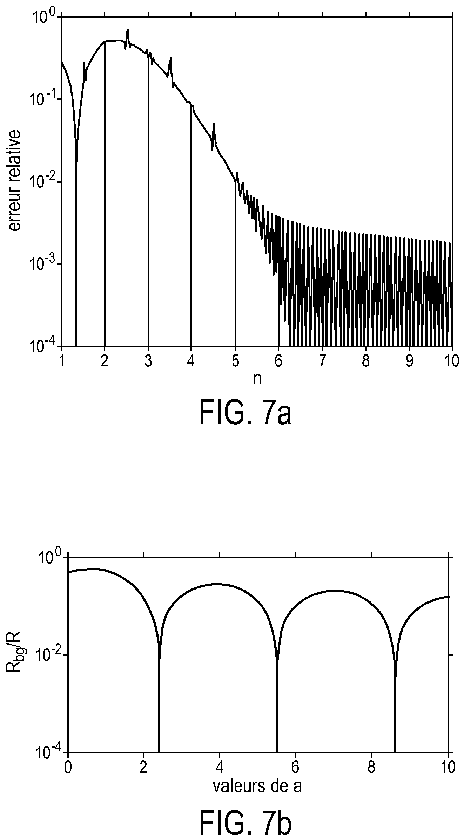

- la figure 7 montre, en (a), un exemple d'erreur relative simulée sur la phase commise en utilisant la « détection synchrone généralisée » pour des valeurs croissantes de n. La simulation a été faite avec $\phi_S = \pi/4$, $\Omega t_{int} = 20\pi$, un intervalle d'échantillonnage égal à $2\pi/1000$, et $a = 3$ ; et, en (b), l'atténuation du champ de fond pour des valeurs croissantes de $a$ pour un champ de fond identique, en amplitude, au champ signal. Dans cette simulation, n = 30, $\Omega t_{int} = 20\pi$, et l'intervalle d'échantillonnage est égal à $2\pi/1000$, la contribution de fond tombe à zéro, pour $a$ correspondant à un zéro de $J_0(a)$ ou pour n grand.

## DESCRIPTION DETAILLEE

Pour de nombreux capteurs et instruments optiques, il est important de pouvoir réaliser des mesures de phase précises, rapides et à moindre coût. Parmi le grand nombre de techniques de modulation/démodulation interférométriques connues, décrites par exemple dans la référence [1] « S. Yin , P. Ruffin, F. T. S. Yu, Fiber Optic Sensors (CRC Press, Boca Raton, 2008) », des modulations de phase basées sur la vibration de miroirs optiques, des étireurs de fibres piézoélectriques, et d'autres modulateurs de phase non linéaires sont particulièrement intéressants, notamment dans le cadre de la microscopie optique résolue en phase et de l'imagerie de champ proche optique décrite dans les références [2, 3, 4] « 2. P. S. Carney, B. Deutsch, A. A. Govyadinov, and R. Hillenbrand, "Phase in nanooptics" ACS Nano*; 3.* N. Ocelic, A. Huber, and R. Hillenbrand, "Pseudoheterodyne détection for background-free near-field spectroscopy,*"; et 4.* M. Vaez-Iravani, and R. Toledo-Crow, "Phase contrast and amplitude pseudoheterodyne interference near field scanning optical microscopy," Appl. Phys. Lett. 62, 1044-1046 (1993*).»*

En particulier, les avantages de la modulation à base de miroir par rapport aux modulateurs de fréquence acousto-optique (hétérodyne avec un décalage en fréquence $f_0$ fixe) sont : un faible coût, une grande simplicité de mise en oeuvre, un faible bruit ainsi qu'une excellente achromaticité, ce qui est nécessaire pour des applications spectroscopiques.

Le principe général (de l'interférométrie à modulation de phase) consiste à moduler la phase dans le bras de référence de l'interféromètre en ajoutant une longueur de retard variable et en mesurant les interférences résultantes. Lorsque la modulation de phase est linéaire, il se produit un battement harmonique linéaire avec le signal du bras de référence, et, tout changement de phase dans le bras signal implique une avance de phase, ou un retard de phase, qui peut être enregistré avec un phase-mètre électronique. Parce qu'une modulation de phase peut être décrite comme une modulation de fréquence Doppler, de telles méthodes sont souvent désignées comme pseudo-hétérodynes bien que ce terme ait été initialement utilisé pour décrire un système de détection où la source optique elle-même est modulée en fréquence cf. référence [5, 6] « D. A. Jackson, A. D. Kersey, M. Corke, and J. D. C. Jones, "Pseudoheterodyne détection scheme for optical interferometers," electronic lett. 18, 1081-1083 (1982*)* » et « R. I. Laming, M. P. Gold, D. N. Payne, and N. A. Halliwell, "Fibre-optic vibration probe," Electronic Lett. 22, 167 168 (1986) » ou en phase cf. reference [7] « A. D. Kersey, A. C. Lewin, and D. A. Jackson "Pseudo-heterodyne détection for the fiber gyroscope," Electronic Lett. 20, 368-370 (1984*)"* dans des interféromètres asymétriques. Comme il est beaucoup plus facile d'obtenir une modulation de phase sinusoïdale du type $\phi_R(t)=a.\sin(\Omega t)$ en faisant vibrer un miroir, ou en étirant une fibre, plutôt qu'une modulation de phase linéaire du type $\phi_R(t)=\Omega t$, les méthodes pseudo-hétérodynes ont été généralisées à une telle modulation de phase périodique non linéaire. Toutefois, dans ces cas, l'intensité détectée présente de multiples harmoniques, aux fréquences $n\Omega$ avec n entier, et la phase n'est pas récupérable par une détection synchrone conventionnelle unique.

Différentes approches ont été proposées pour résoudre ce problème, notamment dans le contexte des capteurs à fibre optique [8,9] et de l'optique en champ proche [4, 10, 3] où le signal $I_{mod}$ est particulièrement faible et présente une « modulation supplémentaire en amplitude ». Pour une fonction de modulation sinusoïdale $\phi_R(t)=a.\sin(\Omega t)$, les détections synchrones sur au moins deux fréquences caractéristiques présentes dans le signal détecté (MDS) ont été utilisées avec succès dans les références [3,13], « N. Ocelic, A. Huber, and R. Hillenbrand, "Pseudoheterodyne détection for background-free near-field spectroscopy," Appl. Phys. Lett. 89, 101124 (2006) » et dans la demande internationale « WO 2007/039210 A12006 ». Cependant, le signal utile étant étendu sur un plus grand nombre de fréquences, des méthodes plus efficaces ou plus simples sont considérées dans les références [11,12,13].

La présente invention concerne une méthode générale pour obtenir l'information de phase et d'amplitude contenue dans un signal électrique $I_{det}$ contenant une partie modulée $I_{mod}$ décrite ci-dessus en [0008], par l'intermédiaire d'une détection synchrone dite « généralisée », objet de la présente invention, afin de simplifier l'extraction de ces deux grandeurs et d'optimiser le rapport signal à bruit. La modification par rapport à une DS classique consiste à utiliser les signaux C(t) et S(t) décrits en [0008] qui contiennent toutes les fréquences intéressantes à la place des termes cosinus et sinus au sein des équations (1 et 2).

Il s'agit avantageusement de déterminer de manière optimale et pratique l'amplitude et la phase d'un signal faible associé à des porteuses stationnaires non sinusoïdales.

La détection synchrone généralisée (objet de la présente invention) peut être appliquée sur un signal électrique évoluant temporellement et ayant la forme suivante:

$$I_{\text{det}} = I_{mod} + (I'_{mod} + cte) \qquad (3)$$

où $I_{mod}$ est décrit précédemment en [0008]. $I_{mod}$ peut avoir l'une ou l'autre des formes (a) et (b) mentionnées précédemment. La forme (b) est dite présentée une modulation d'amplitude supplémentaire. Le signal $I'_{mod}$ éventuellement nul, est modulé à des fréquences généralement différentes de celles contenues dans $I_{mod}$, et le terme *cte* correspond à un terme constant (éventuellement nul). A ces termes s'ajoute le bruit inhérent à tout signal.

Pour illustrer l'allure des spectres associés à $I_{mod}$ dans ces deux cas (a) et (b) décrits en [0008], la figure 1 présente schématiquement un exemple de transformées de Fourier des signaux de type a et b dans le cas d'une fonction de modulation $\phi_R$ périodique donnée de période $2\pi/\Omega$. Dans le cas (a), le spectre de $I_{mod}$ présente des composantes fréquentielles à $\Omega$ et ses harmoniques: soit les fréquences mS2 avec m entier, certaines de ces composantes pouvant être nulles. Dans le cas (b) ces composantes apparaissent comme des bandes latérales autour de la fréquence angulaire de modulation d'amplitude considérée $\Omega_A$. Dans les deux cas (a) et (b) $I_{mod}$ peut s'écrire sous une forme équivalente à :

$$I_{mod} \propto E_S (\cos(\phi_S) * C + \sin(\phi_S) * S) \qquad (4)$$

où les expressions de C(t) et S(t) diffèrent selon que l'on se trouve dans le cas de la première modalité (a) ou de la deuxième modalité (b), comme mentionné auparavant (cf. [0008]). $E_S$, $\cos(\phi_S)$ et $\sin(\phi_S)$ étant constants ou quasiment constants durant une mesure où le procédé est mis en oeuvre, on voit que C(t) et S(t) possèdent le même contenu spectral que $I_{mod}$.

Le procédé consiste alors à utiliser les signaux C(t) et S(t) comme signaux de référence dans une détection synchrone dites «généralisée» comprenant les étapes suivantes : multiplier le signal détecté contenant $I_{mod}$ par les références C(t) et S(t) ; ensuite intégrer ce résultat pendant un certain temps, de façon à obtenir des signaux X et Y proportionnels à $E_S \cos(\phi_S)$ et $E_S \sin(\phi_S)$ ; et exploiter les signaux de sortie X et Y pour déterminer les grandeurs à extraire : $E_S$ et $\phi_S$. Ces différentes étapes sont représentées sur la figure 2a), avec un exemple schématique de spectre possible pour $I_{det}$ (cf. figure 2b)) et pour les signaux de références C(t) et S(t) (cf. figure 2c)).

Avantageusement, $E_S$ et $\phi_S$ sont déterminés en évaluant analytiquement les intégrales des deux produits susmentionnés, c'est-à-dire en déterminant une expression analytique pour les sorties X et Y, pour une fonction de modulation $\phi_R$ donnée (sinusoïdale, triangulaire, etc.). Grâce à cette évaluation les deux coefficients de proportionnalité existant entre X et $E_S*\cos(\phi_S)$ d'une part, et Y et $E_S*\sin(\phi_S)$ d'autre part, sont évalués. Ces deux coefficients sont généralement différents l'un de l'autre et dépendent de la profondeur de modulation de la fonction $\phi_R$. A défaut, les intégrales peuvent être évaluées numériquement pour déterminer ces coefficients.

Dans ce procédé, objet de la présente invention, les signaux de références C(t) et S(t) sont construits à partir de la fonction de modulation $\phi_R$ qui est connue. De même, dans le cas (b), la fonction de modulation d'amplitude f(t) est éventuellement déterminée à partir de la fréquence exacte d'oscillation de la sonde $\Omega_A$. si elle n'est pas accessible directement.

Le procédé électronique d'extraction constituant l'invention est détaillé ci-après dans le contexte de l'interférométrie optique en l'absence de « modulation en amplitude supplémentaire », et en présence de cette dernière. Cette seconde modalité est importante dans le cas de signaux $I_{mod}$ de très faible intensité comme c'est le cas en microscopie de champ proche optique où une nano-sonde fournit un faible signal modulé en amplitude dans le bras signal d'un interféromètre.

En interférométrie optique, un champ « signal » est décrit par une amplitude $E_S$, éventuellement modulée, et une phase $\phi_S$. Il est mélangé sur un détecteur avec un signal de référence ayant une modulation périodique de phase ou de fréquence décrit par $\phi_R(t)$. L'invention permet d'extraire l'amplitude $E_S$ et la phase $\phi_S$ dans les deux cas : avec et sans modulation d'amplitude.

En remarque préliminaire, l'invention est présentée dans le cadre de la mesure interférométrique, mais l'amplitude $E_S$ et la phase $\phi_S$ peuvent être vues comme l'amplitude et la phase de tout signal électrique harmonique ayant été mélangé, ou multiplié, avec un autre signal $E_r(t)$ modulé en phase ou en fréquence.

En interférométrie, au moins un champ signal $E_s(t)$ interfère avec un champ de référence $E_r(t)$ sur un détecteur. On considère dans cette description que ces champs oscillent à une fréquence optique $\omega$ quelconque, non limitée au visible mais supérieure à la bande passante du détecteur. Dans la description particulière qui est faite, le champ signal considéré peut s'écrire (1er cas) :

$$E_s(t) = \sqrt{2} E_S \cos(\omega t + \phi_S)$$

Ce champ est multiplié par f(t) s'il y a une modulation d'amplitude supplémentaire effectuée sur le champ signal. Dans le cas d'intérêt où l'on considère une modulation d'amplitude harmonique, f(t)=cos($\Omega_A$t), et le champ signal s'écrit (2$^{ème}$ cas) :

$$E_s(t) = \sqrt{2}E_S \cos(\Omega_A t)\cos(\omega t + \phi_S)$$

Dans ces deux cas, $E_S$ et $\phi_S$ sont appelés amplitude et phase du champ $E_S(t)$. Le champ de référence peut

$$E_r(t) = \sqrt{2}E_R \cos(\omega t + \phi_R)$$

s'écrire :

Où la phase $\phi_R$ évolue dans tous les cas que nous considérons selon une certaine fonction de modulation $\phi_R(t)$ produite typiquement par un modulateur de phase ou encore une modulation de la fréquence. L'intensité optique détectée par le détecteur est transformée en un signal électrique correspondant à :

$I_{det} \propto \langle(E_s(t) + E_r(t))^2\rangle$ où les crochets symbolisent une moyenne sur un temps lié à la bande passante du détecteur.

**1. Cas sans modulation d'amplitude supplémentaire.**

Dans ce cas, le signal électrique détecté décrit dans l'équation (3) est produit par l'interférence du champ signal et référence sur un détecteur et s'écrit typiquement:

$$I_{\det} \propto E_S{}^2 + E_R{}^2 + 2E_R E_S \cos(\phi_S - \phi_R) \tag{5}$$

Dans le cas présent, la phase $\phi_R(t)$ varie généralement à une vitesse beaucoup plus élevée que la variation attendue des deux grandeurs $E_S$ et $\phi_S$. L'intensité mesurée en un temps suffisamment court peut alors s'écrire comme la somme d'un terme constant ou quasi-constant et d'un terme modulé tel que

$$I_{\det} \propto I_0 + I_{mod}, \tag{6}$$

avec $I_0$ équivalent au terme constant pendant la mesure, et

$$I_{mod} = 2E_R E_S [\cos(\phi_S)\cos(\phi_R) + \sin(\phi_S)\sin(\phi_R)], \tag{7}$$

Le terme, $I_{mod}$, peut être décomposé sur la base (cos ($\phi_R$), sin ($\phi_R$)). Un moyen idéal pour déterminer l'amplitude et la phase est alors d'obtenir une variation linéaire de phase $\phi_R = \Omega t$ , puis, d'effectuer une détection synchrone en multipliant le signal détecté par les deux harmoniques orthogonales de référence, sin (S2t) et cos ($\Omega$t), et enfin d'intégrer sur un temps suffisant. De telles opérations sont avantageusement effectuées par une détection synchrone ; et l'amplitude $E_S$ et la phase $\phi_S$ sont directement déduites des deux signaux de sortie suivants:

$$X_\Omega(I_{\det}) = \frac{1}{\Omega t_{int}}\int_0^{\Omega t_{int}} I_{\det}\cos(\Omega t)d(\Omega t) = E_S E_R \cos(\phi_S) \tag{8}$$

$$Y_\Omega(I_{\det}) = \frac{1}{\Omega t_{int}}\int_0^{\Omega t_{int}} I_{\det}\sin(\Omega t)d(\Omega t) = E_S E_R \sin(\phi_S). \tag{9}$$

Où $t_{int}$ est le temps d'intégration.

Malheureusement, la réalisation d'une variation de phase purement linéaire, en utilisant des modulateurs de phase, n'est pas possible, car ces derniers présentent nécessairement une gamme finie de modulation de phase. Une approche bien connue pour surmonter cette difficulté est d'utiliser une modulation serrodyne, ou bien, en d'autres termes, d'utiliser une modulation en dents de scie du chemin optique dans le bras de référence. Une modulation quasi-harmonique de $I_{det}$ est alors obtenue si la pleine amplitude de la dent de scie correspond à un nombre entier n fois $2\pi$ (par exemple, une modulation du chemin optique de $n\lambda$). Bien que cette approche fonctionne, certaines erreurs sont induites en raison du temps non négligeable de «flyback» à la fin de la modulation en dents de scie. Par conséquent, la modulation serrodyne n'est pas très recommandée pour des expériences rapides et précises, et, dans de nombreux cas, une fonction sinusoïdale $\phi_R = a\sin(\Omega t)$ est nécessaire (l'amplitude maximale de modulation $a$ est appelée profondeur de modulation). Dans ce dernier cas, le spectre de Fourier de $I_{det}$ présente des bandes harmoniques latérales aux fréquences radiales $m\Omega$. Les amplitudes de ces bandes latérales sont obtenues en utilisant l'expansion Jacobi-Anger de cos ($\phi_R$), lorsque m est pair, et de sin ($\phi_R$), avec m uniquement impair. Une détection synchrone à l'harmonique $m\Omega$ donne :

$$X_{m\Omega}(I_{det}) = 2E_R E_S \cos(\phi_S) \left| \begin{array}{ll} J_m(a) & pour\ m\ pair \\ 0 & pour\ m\ impair \end{array} \right. \tag{10}$$

$$Y_{m\Omega}(I_{det}) = 2E_R E_S \sin(\phi_S) \left| \begin{array}{ll} 0 & pour\ m\ pair \\ J_m(a) & pour\ m\ impair \end{array} \right. \tag{11}$$

où $J_m$ est la fonction de Bessel de rang m.

Comme le signal est réparti sur plusieurs harmoniques, on doit effectuer une détection synchrone sur au moins deux des harmoniques (paire et impaire) pour récupérer des informations d'amplitude et de phase. Certaines précautions doivent être prises quant au choix de la meilleure valeur de $a$, car une amplitude de modulation donnée peut conduire à une grande valeur de $J_m$ pour m impair, mais une petite valeur pour m pair, et vice versa. De plus le nombre d'harmoniques est théoriquement infini pour une telle modulation de phase, (en pratique l'essentiel de l'énergie est concentré sur un plus ou moins grand nombre d'harmoniques en fonction de la profondeur de modulation). Ceci implique une dégradation du rapport signal à bruit même si plus de deux DS sont utilisées, surtout si la profondeur de modulation est grande.

Ainsi, $E_S$ et $\phi_S$ peuvent être déterminés par la présente invention. En effet, l'un des intérêts de la présente invention est que l'intensité détectée n'est pas multipliée par deux références harmoniques orthogonales telles que $\sin(m\Omega t)$ et cos ($m\Omega t$), et ce pour plusieurs harmoniques m. Selon l'invention, le signal est simplement multiplié par deux références orthogonales ayant directement le même ensemble de fréquences harmoniques que $I_{mod}$, nommées C(t) et S(t) comme décrites ci-dessus en [0008], et qui s'écrivent dans la modalité (a) considérée ici : C(t) cos ($\phi_R$) et S(t) sin ($\phi_R$). Le résultat de ces opérations est intégré sur un temps suffisant. De cette façon, toute la puissance disponible au sein de $I_{mod}$ est utilisée pour récupérer les informations de champ du signal quelles que soit l'amplitude $a$ et la fonction de modulation de phase considérée $\phi_R$. De la même manière, de nombreuses fonctions de modulation de phase peuvent être envisagées, à savoir, les fonctions sinusoïdales, triangulaires, symétriques ou asymétriques. Par ailleurs, comme dans le cas de la modulation serrodyne ou hétérodyne classique l'opération ci-dessus peut être effectuée avec un multiplicateur et un intégrateur électronique, avec cos ($\phi_R$) pour le signal de référence X, et sin ($\phi_R$) pour le signal de référence Y:

$$X_{\phi_R}(I_{det}) = \frac{1}{\Omega t_{int}} \int_0^{\Omega t_{int}} I_{det} \cos(\phi_R)\, d(\Omega t). \tag{12}$$

$$Y_{\phi_R}(I_{det}) = \frac{1}{\Omega t_{int}} \int_0^{\Omega t_{int}} I_{det} \sin(\phi_R)\, d(\Omega t). \tag{13}$$

Dans le cas avantageux d'une modulation sinusoïdale $\phi_R = a\sin(\Omega t)$, les deux intégrales ci-dessus ont des solutions analytiques connues basées sur la représentation intégrale de la fonction de Bessel (cf. référence [13]).

En négligeant, dans un premier temps, le terme constant $I_0$ présent dans $I_{det}$ (cf. Eq 6), c'est à dire en considérant qu'il peut être soustrait, on obtient les équations suivantes pour les sorties X et Y:

$$X_{a\sin(\Omega t)}(I_{mod}) = E_R E_S (1 + J_0(2a)) \cos(\phi_S). \tag{14}$$

$$Y_{a\sin(\Omega t)}\left(I_{mod}\right) \quad = \quad E_R E_S\left(1 - J_0(2a)\right)\sin(\phi_S), \tag{15}$$

Où $J_0$ est la fonction de Bessel d'ordre 0. La phase et l'amplitude peuvent alors être récupérées à partir de ces deux équations. Si la profondeur de modulation $a$ peut être réglée, il est commode de choisir une valeur de $a$ telle que $J_0$ ($2a$) = 0, (par exemple, pour $a$ - 1.20 rad, $a$ --2.76 rad). Les sorties X et Y, données par (14-15) sont alors identiques au cas serrodyne parfait, comme dans les relations 8 et 9 ci-avant.

La figure 3 présente des exemples de références orthogonales C(t) et S(t) pour différentes fonctions de modulation $\phi_R$: dans le cas serrodyne (3a), pour une fonction de modulation sinusoïdale (3b), et pour une fonction de modulation triangulaire (3c). Dans le cas de la figure (3a), $\phi_R$ est égale à $\Omega t$ (cas serrodyne idéal). La modulation de phase sinusoïdale (Fig.3b), $\phi_R$ est égal à $a_1\sin\Omega t$, est généralement la plus utilisée pour les modulateurs de phases par rapport à d'autres fonctions de modulation de phase. Cependant, d'autres formes de modulations peuvent être considérées dans certaines situations. Notamment, pour une fonction triangulaire (fig.3c), où $\phi_R = a^*Tr(\Omega t)$, les deux signaux C(t) cos ($a^*Tr(\Omega t)$) et S(t) sin ($a^*Tr(\Omega t)$) peuvent facilement être implémentés pour un faible coût avec des composants électroniques analogiques.

Plus généralement, la modulation de phase réelle $\phi_R = \phi_{real}$ peut différer de la fonction de modulation attendue. Cette modulation de phase réelle effectivement induite par le modulateur peut être mesurée lors de l'expérience, par exemple, à l'aide d'un modulateur piézo-électrique muni de jauges de contraintes ou d'autres capteurs de déplacement. Empiriquement, la même approche peut également être utilisée dans ce cas: les intégrales (12 et 13) sont numériquement évaluées avec la fonction $\phi_R(t)$ mesurée afin d'exploiter, de la meilleure manière possible, les sorties X et Y et extraire amplitude et phase. Dans cette approche les deux coefficients de proportionnalités liant X et Y à $E_S^*\cos(\phi_S)$ et $E_S^*\sin(\phi_S)$ sont donc évalués numériquement. Cette approche peut aussi être conduite, sans difficulté, en présence d'une modulation d'amplitude supplémentaire.

Par ailleurs, même s'il est possible d'obtenir $I_{mod}$ en soustrayant $I_0$ de $I_{det}$ une telle opération complique le montage expérimental, à moins que le signal $E_P^2$ soit suffisamment petit pour considérer que $I_0$ vaut approximativement $E_R^2$. Le terme constant $I_0$ est facilement supprimé par un simple filtre passe-haut placé avant la détection synchrone généralisée. Mais, de tels filtres peuvent affecter $I_{mod}$ puisque la référence $\cos(\phi_R)$ peut présenter une composante continue non négligeable, comme on peut le voir sur la figure (3c). C'est également le cas pour une modulation $\phi_R$ sinusoïdale si l'on considère une amplitude arbitraire $a$ (cf. équations (10 et 11) avec m = 0). Pour cette raison, il est utile d'évaluer les sorties délivrées par la détection synchrone généralisée proposée pour un signal détecté filtré de sa composante continue $\tilde{I}_{det}$. Dans ce cas la solution est encore analytique et s'écrit :

$$X_{a\sin(\Omega t)}\left(\tilde{I}_{det}\right) \quad = \quad E_R E_S\left(1 + J_0(2a) - 2J_0^2(a)\right)\cos(\phi_S) \tag{16}$$

$$Y_{a\sin(\Omega t)}\left(\tilde{I}_{det}\right) \quad = \quad E_R E_S\left(1 - J_0(2a)\right)\sin(\phi_S) \tag{17}$$

Où ($E_S$, $\phi_S$) peuvent être récupérés directement à partir de ces équations. Nous notons que pour $2a$ correspondant à un k-ième zéro de $J_0$, le terme $J_0^2(a)$ est petit pour k pair, et surtout pour les grandes valeurs de k, de sorte que les sorties sont à nouveau similaires aux équations (8 et 9). Les expressions correspondantes pour une modulation triangulaire $\phi_R(t)=aTr(\Omega t)$, où $a$ est la profondeur de modulation, et Tr est une fonction triangulaire allant de -1 à 1 en phase avec $\sin(\Omega t)$ sont :

$$X_{aTr(\Omega t)}\left(I_{mod}\right) \quad = \quad E_R E_S\cos(\phi)\left(1 + \frac{\sin(a)\cos(a)}{a}\right) \tag{18}$$

$$Y_{aTr(\Omega t)}\left(I_{mod}\right) \quad = \quad E_R E_S\sin(\phi)\left(1 - \frac{\sin(a)\cos(a)}{a}\right) \tag{19}$$

et

$$X_{aTr(\Omega t)}\left(\tilde{I}_{det}\right) \quad = \quad E_R E_S \cos(\phi)\left(1 + \frac{\sin(a)\cos(a)}{a} - \frac{2\sin^2(a)}{a^2}\right) \qquad (20)$$

$$Y_{aTr(\Omega t)}\left(\tilde{I}_{det}\right) \quad = \quad E_R E_S \sin(\phi)\left(1 - \frac{\sin(a)\cos(a)}{a}\right) \qquad (21)$$

L'analyse des coefficients liant les sorties X,Y à $E_S*\cos(\phi_S)$ et $E_S*\sin(\phi_s)$ respectivement montrent aussi qu'une forme identique au cas serrodyne parfait, (relations 8 et 9) est obtenue pour certaines profondeurs de modulation $a$.

Notons qu'il est aussi possible de filtrer les signaux de références C(t) et S(t) de leur composante continue au lieu de filtrer le signal d'entrée, ce qui conduit aux mêmes résultats.

**2. Cas avec une modulation d'amplitude supplémentaire dans le bras signal**

On considère maintenant la situation où l'amplitude du champ signal est aussi modulée, à une fréquence angulaire $\Omega_A$. Cette modulation d'amplitude supplémentaire est particulièrement intéressante dans le cas des signaux très faibles, et permet de se débarrasser des lumières cohérentes indésirables (non modulées) arrivant sur le détecteur en plus des signaux correspondant à $E_S$ et $E_R$. Cette approche est notamment utilisée avec succès en microscopie de champ proche optique, où les montages de détection interférométrique hétérodyne et pseudo-hétérodyne sont utilisés pour déterminer l'amplitude et la phase du champ diffusé par des nano-sondes oscillant en contact intermittent à la surface d'un échantillon. Dans de telles expériences, la fréquence angulaire $\Omega_A$ de la modulation d'amplitude est typiquement supérieure de quelques ordres de grandeur par rapport à la fréquence angulaire fondamentale $\Omega$ associée à la modulation de phase $\phi_R$. Pour simplifier la description mathématique, nous notons $\Omega_A = n\Omega$, où 'n' est généralement beaucoup plus grand que un. La partie du champ du signal modulé à $\Omega_A$ par la sonde diffusante peut être notée :

$$E_p(t) = \sqrt{2} E_P \cos(n\Omega t) \cos\left(\Omega t + \phi_S\right)$$

Avec cette expression, le terme utile modulé, $I_{mod}$, de la relation (7) est maintenant :

$$I_{mod} = 2 E_R E_P \cos(n\Omega t) \cos\left(\phi_R - \phi_S\right), \qquad (22)$$

Où $E_P$ correspond à l'amplitude du signal recherché noté $E_S$ précédemment. Cette dernière équation peut encore s'écrire :

$$I_{mod} = E_R E_P \cos\left(n\Omega t + \phi_R - \phi_S\right) + E_R E_P \cos\left(n\Omega t - \phi_R + \phi_S\right), \qquad (23)$$

pour souligner la présence de bandes latérales à des fréquences supérieures et inférieures $n\Omega$, et pour faciliter les calculs des intégrales suivantes. Dans l'expression du signal détecté $I_{det}$ s'ajoute à $I_{mod}$ le terme :

$$I_0 = cte + E_p^2 \cos^2(n\Omega t) \qquad (24)$$

qui ne porte pas d'information sur la phase, et présente une modulation à la fréquence 0 et $2n\Omega$ seulement. Par conséquent, nous pouvons ignorer $I_0$ puisque les signaux de référence C(t) et S(t) ne contiennent pas ces fréquences dans leur spectre. Comme précédemment, on multiplie l'intensité détectée par les deux signaux de référence orthogonaux, C (t) = 2cos (n$\Omega$t) cos$\phi_R$ et S (t) = 2cos (n$\Omega$t) sin$\phi_R$. Ceux-ci ont le même ensemble de fréquences que $I_{mod}$, contenues dans $I_{det}$ et, nous intégrons pour obtenir :

$$X_{n\Omega t \pm \phi_R}\left(I_{det}\right) \quad = \quad \frac{1}{\Omega t_{int}} \int_0^{\Omega t_{int}} I_{det} C(t) d(\Omega t) \propto E_S \cos(\phi_S), \qquad (25)$$

$$Y_{n\Omega t \pm \phi_R}(I_{\text{det}}) \quad = \quad \frac{1}{\Omega t_{int}} \int_0^{\Omega t_{int}} I_{\text{det}} S(t) \, d(\Omega t) \propto E_S \sin(\phi_S). \qquad (26)$$

Où C (t) et S (t) peuvent être développés respectivement en cos ($n\Omega t + \Phi_R$) + cos ($n\Omega t - \phi_R$) et sin ($n\Omega t + \phi_R$) - sin ($n\Omega t - \phi_R$). Dans le cas d'une variation de phase sinusoïdale, les deux intégrales sont alors des solutions analytiques simples obtenues à partir de la représentation intégrale des fonctions de Bessel d'ordre n:

$$X_{n\Omega t \pm a \sin(\Omega t)}(I_{\text{det}}) \quad = \quad E_R E_P \cos\phi_S \left(1 + J_{2n}(2a) + J_0(2a)\right), \qquad (27)$$

$$Y_{n\Omega t \pm a \sin(\Omega t)}(I_{\text{det}}) \quad = \quad E_R E_P \sin\phi_S \left(1 - J_{2n}(2a) - J_0(2a)\right). \qquad (28)$$

Où ($E_P$, $\phi$) peuvent être récupérés directement à partir de ces équations.

Nous notons que $J_{2n}(2a)$ est en fait négligeable pour une grande valeur de n et pour une amplitude de modulation de phase raisonnable $a$ (par exemple pour n = 10 et $a < n$, ou n = 20 et $a < 6\pi$). Il est donc avantageux dans ce cas de choisir une modulation de phase petite, telle que $J_0(2a) = 0$, de sorte que les sorties sont à nouveau identiques au cas serrodyne parfait donné par les équations (8 et 9).

Toujours dans le cas d'une modulation d'amplitude supplémentaire, nous considérons maintenant que nous pouvons avoir un champ de fond additionnel (non désiré) cohérent, arrivant sur le détecteur de la forme :

$$E_{bg}(t) = \sqrt{2} E_{Bg} \cos\left(\omega t + \phi_{Bg}\right)$$

Ce troisième champ $E_{bg}$, d'amplitude et de phase constante, peut interférer avec le champ signal $E_p(t)$ et donner ainsi un terme d'intensité supplémentaire modulé à la fréquence radiale $n\Omega$:

$$I_{mod}^{bg} = 2E_{Bg} E_P \cos(n\Omega t) \cos\left(\phi_{Bg} - \phi_S\right). \qquad (29)$$

Puisque C (t) et S (t) ont également des composantes de fréquence à $n\Omega$, nous pouvons évaluer la contribution de ces termes dans la détection synchrone par:

$$X_{n\Omega t \pm \phi_R}\left(I_{mod}^{bg}\right) \quad = \quad \frac{1}{\Omega t_{int}} \int_0^{\Omega t_{int}} I_{mod}^{bg} C(t) \, d(\Omega t) \qquad (30)$$

$$Y_{n\Omega t \pm \phi_R}\left(I_{mod}^{bg}\right) \quad = \quad \frac{1}{\Omega t_{int}} \int_0^{\Omega t_{int}} I_{mod}^{bg} S(t) \, d(\Omega t). \qquad (31)$$

En considérant toujours une modulation de phase $\phi_R(t)$ sinusoïdale, on trouve que les contributions de ces deux intégrales sont en fait proportionnelles à $J_{2n}(a) + J_0(a)$. A partir de ce résultat, nous voyons que la contribution des termes indésirables modulés à la fréquence angulaire $\Omega_A = n\Omega$ peut être annulée en réglant la profondeur de modulation de $\phi_R$, $a$, pour qu'elle corresponde à un zéro de la fonction de Bessel, où $J_{2n}(a)$ sera extrêmement faible pour une valeur de n suffisamment grande.

Il est à noter que le terme d'interférence supplémentaire non désirée entre $E_{bg}(t)$ et $E_r(t)$, et le terme d'auto interférence proportionnelle à $E^2_{bg}$, ne sont pas modulés à $n\Omega$ ni à aucune des fréquences présentes dans les fonctions C et S. Ils sont donc filtrés naturellement sans précaution particulière.

## 3. Tests pratiques et applications

La figure 4 présente un interféromètre de Michelson construit pour évaluer la validité de l'approche ci-dessus, et pour une mesure de phase précise dans chacune des deux modalités (a) et (b) mentionnées. Dans la première configuration de la figure 4(a), on s'intéresse à la première modalité (a). Une source laser infrarouge 11 est utilisée. Un miroir 5 est monté sur un cristal piézo-électrique 2. Ce miroir est utilisé dans le bras signal 1 pour obtenir des changements contrôlables de la phase de $\phi_S$, monitorés par l'intermédiaire d'un capteur de déplacement capacitif 3. A des fins de démonstration, un miroir de référence 5' monté sur un second cristal piézoélectrique 4' est excité sinusoïdalement à une fréquence angulaire arbitraire de 200 $\pi$ rad Hz et à une amplitude arbitraire correspondant à $a$ = 2,4 rad. Le signal détecté $I_{det}$ est filtré par un filtre passe-haut 6, et le signal résultant $\tilde{I}_{det}$ est échantillonné, dans cet exemple, avec une carte d'acquisition de 16 bits. L'opération synchrone généralisée exprimée par les équations (12 et 13) est réalisée numériquement en temps réel, en utilisant un logiciel LabVIEW. Ce procédé électronique produit les sorties X et Y liées à $E_S$*cos($\phi_S$) et $E_S$*sin($\phi_S$) par les coefficients de proportionnalité, déterminés analytiquement, apparaissant dans les équations (16 et 17). La résolution triviale de ce système d'équation donne accès à la phase $\phi_S$ ainsi qu'aux variations d'amplitude $E_S$. Le même résultat pourrait être obtenu à l'aide d'autres cartes d'acquisition de logiciel similaire, telles que des cartes FPGA (Field-Programmable Gate Array), ou encore analogiquement. Les coefficients de proportionnalités peuvent aussi être déterminés numériquement, et ce pour différentes fonctions de modulations.

La figure 5 indique les mesures de phases obtenues par ce procédé pour un déplacement triangulaire symétrique du signal miroir. Une bonne concordance est observée avec le changement de phase réelle qui a été obtenu par le capteur de déplacement.

Dans la seconde configuration illustrée par la figure 4 (b), le champ signal est modulé en amplitude. Ceci est particulièrement utile pour extraire un signal très faible du bruit. Cette configuration correspondant à la seconde modalité (b) est ici utilisée pour une expérience d'optique en champ proche où la lumière diffusée périodiquement par une nano-sonde 10 interfère avec le champ de référence. Une carte d'acquisition de haute résolution (22 bits) est préférablement utilisée pour réaliser numériquement la DS généralisée, avec un niveau de performance de haute qualité numérique. L'opération synchrone généralisée exprimée par les équations (25 et 26) est réalisée numériquement en temps réel, en utilisant un logiciel LabVIEW. Ce procédé électronique produit les sorties X et Y liées à $E_S$*cos($\phi_S$) et $E_S$*sin($\phi_S$) par les coefficients de proportionnalité déterminés analytiquement dans les équations (27 et 28). La résolution triviale de ce système d'équations donne accès à la phase $\phi_S$ ainsi qu'aux variations d'amplitude $E_S$. Un laser infrarouge 11 émettant une longueur d'onde proche de 10,1 $\mu$m avec une puissance plutôt faible mais très stable de l'ordre de 10 mW, est utilisé. Plus de détails sur le système optique lui-même est décrit dans la référence [12].

La figure 6 (a, b) présente un exemple de mesure de phase obtenue avec le dispositif de la figure 4(b) en différents points d'un échantillon. Pour tester et évaluer la qualité de la mesure de phase dans ce second mode, un diapason oscillant nu a été également déplacé d'avant en arrière dans un mouvement triangulaire contrôlé ($\pm$0.80 $\mu$m correspondant à $\pm$1.0 rad) dans le bras signal de la figure 4(b), à la place de la nano-sonde. La mesure de la phase du champ diffusé par ce système modulant l'amplitude du champ signal est représentée sur la figure 6(c).Les images de la figure 6 (a, b) ont été obtenues sur un réseau de lignes de cuivre intégrées dans du silicium. Les tracés des deux lignes de cuivre imagées sont clairement visibles, tant sur l'amplitude (lignes noires) que sur la phase (lignes claires). Ce résultat démontre la capacité de l'invention à déterminer l'amplitude et la phase d'un champ issu d'une sonde de champ proche optique, permettant une imagerie résolue en phase à des échelles sub-longueur d'onde, en présence d'un éventuel champ de fond.

Dans ces expériences, la fréquence de modulation d'amplitude est ici imposée par la fréquence de résonance expérimentale $\Omega_A \simeq 60\pi$ $rad$ $k$Hz du diapason sur lequel la nano-sonde est collée afin de fonctionner en mode contact intermittent (cf. figure 4b). L'oscillation de la sonde est mise en phase avec un signal d'excitation $e_{\Omega_A}(t)$ et la fréquence angulaire du miroir de référence de vibration est arbitrairement choisie et est égale à $\Omega = 2$ $\pi$ $rad$ kHz avec un signal d'excitation $e_{\Omega_A}(t)$ conduisant à un rapport de fréquence de n $\simeq$ 30. Bien que le ratio de fréquence $\Omega_A/\Omega$ puisse être réglé à une valeur entière avec une très grande précision, le bénéfice est en fait négligeable pour des valeurs élevées de n, comme l'illustre la simulation représentée sur la figure 7 (a) montrant l'erreur typique commise sur la phase en fonction de la valeur, entière ou non, de n.

Les deux signaux de références sont construits à partir du signal d'excitation normalisé acquis avec la même carte d'acquisition:

$$C(t) \quad = \quad \bar{e}_{\Omega_A}(t)\cos\left(a\bar{e}_\Omega(t)\right) \qquad\qquad (32)$$

$$S(t) \quad = \quad \bar{e}_{\Omega_A}(t)\sin\left(a\bar{e}_\Omega(t)\right), \qquad\qquad (33)$$

Avec ê(t) = e(t) / max (e(t)) ; et $a$ la profondeur de modulation de phase théorique prise à 2,404 rad pour supprimer la contribution du fond (cf. figure (7b)). En pratique, l'amplitude réelle du signal $e_\Omega(t)$ est facilement ajustée pour obtenir cette modulation de phase avec une précision d'environ 0,05 rad. Pour ce faire, la modulation d'amplitude de phase expérimentale peut être obtenue par un capteur placé sur le modulateur de phase piézoélectrique, ou obtenue à partir de la forme de l'intensité détectée du signal.

Le procédé selon l'invention est optimal et remarquable en ce sens qu'il exploite totalement le spectre détaillé du battement détecté entre le signal et la référence, fournissant ainsi le plus haut rapport signal sur bruit possible. Le principe a été détaillé pour des modulations de phase sinusoïdales et triangulaires et a été testé expérimentalement, montrant à la fois une grande stabilité et une bonne fiabilité. Le procédé a été étendu aux signaux modulés en amplitude dans le cas fréquent d'une modulation de phase sinusoïdale. Cette deuxième approche, utile dans le cas d'expériences sur des signaux très faibles, a été testée avec succès en microscopie de champ proche optique dans l'infrarouge moyen, conduisant à un signal élevé par rapport au bruit dans des conditions de faible puissance d'éclairage. En outre, cette deuxième approche a mis en avant les conditions pour obtenir la suppression efficace de la lumière de fond.

En microscopie de champ proche optique à sonde diffusante, il est fréquent qu'une partie du champ de fond cohérent non désiré soit modulé à la fréquence d'oscillation de la nano-sonde $\Omega_{osc}$. Pour se départir de ce champ de fond, on peut souvent détecter le signal utile sur les fréquences harmoniques k*$\Omega_{osc}$, avec k entier. Le procédé permet d'effectuer cette opération de « filtrage », en choisissant pour construire les fonctions C(t) f(t)*cos($\phi_R$) et S(t) f(t)*sin($\phi_R$) une fonction f(t) possédant les harmoniques ou l'harmonique désirées, par exemple : f(t)=cos($\Omega_A$) avec $\Omega_A$=k* $\Omega_{osc}$.

Le même procédé d'extraction électronique peut être employé pour d'autres nano-sondes mises en oeuvre en microscopie de champ proche optique et plus généralement en microscopie à sonde locale. Notamment des sondes à levier, des sondes à ouvertures et sans ouverture.

Divers montages interférométriques peuvent mettre en oeuvre le procédé d'extraction selon la présente invention. Par exemple des interféromètres de type Michelson, Mach-Zehnder, Sagnac, etc. Ces interféromètres peuvent être réalisés dans l'espace libre, en optique intégrée ou bien à l'aide de fibres optiques, notamment en vue d'application dans le domaine des capteurs optiques. Ils peuvent être ou non couplés à des systèmes microscopiques.

Dans certains cas, des signaux parasites sont présents sur les fréquences présentes dans $I_{mod}$, ce qui fausse la mesure d'amplitude et de phase. Pour s'affranchir du problème, on peut filtrer $I_{det}$ de ces signaux (et donc modifier $I_{mod}$) avant la mise en oeuvre du procédé d'extraction, ou/et filtrer les fonctions C(t) et S(t) de ces fréquences. C'est par exemple le cas dans les équations (16-17) où la composante continue de $I_{det}$ est filtrée.

Le procédé d'extraction électronique selon l'invention, peut être utilisé dans des montages interférométriques de façon parallèle ou séquentielle, lorsque plusieurs signaux $I_{det}$ de type (a) ou (b) sont présents. Ceci peut être effectué avantageusement en interférométrie optique lorsqu'un détecteur matriciel est utilisé pour de l'imagerie résolue en phase. Ce procédé peut notamment être employé pour effectuer une analyse de Fourier résolue en phase dans le plan de Fourier d'un objectif.

L'invention concerne typiquement la mesure d'amplitude et de phase dans des montages interférométriques, mais concerne plus généralement la problématique de démodulation et d'amplification de signaux modulés.

Stutt, C.A. (March 1949). "Low-frequency spectrum of lock-in amplifiers". MIT Technical Report (MIT) (105): 1-18.

Scofield, John H. (February 1994). "Frequency-domain description of a lock-in amplifier". American Journal of Physics (AAPT) 62 (2): 129-133.

Cameron C. B. "Recovering signals from Optical fiber Interferometric sensors", PhD thesis, 1991

1. S. Yin , P. Ruffin, F. T. S. Yu, Fiber Optic Sensors (CRC Press, Boca Raton, 2008).

2. P. S. Carney, B. Deutsch, A. A. Govyadinov, and R. Hillenbrand, "Phase in nanooptics" ACS Nano, 6, 8-12 (2012).

3. N. Ocelic, A. Huber, and R. Hillenbrand, "Pseudoheterodyne détection for background-free near-field spectroscopy," Appl. Phys. Lett. 89, 101124 (2006).

4. M. Vaez-Iravani, and R. Toledo-Crow, "Phase contrast and amplitude pseudoheterodyne interférence near field scanning optical microscopy," Appl. Phys. Lett. 62, 1044-1046 (1993).

5. D. A. Jackson, A. D. Kersey, M. Corke, and J. D. C. Jones, "Pseudoheterodyne détection scheme for optical-interferometers," electronic lett. 18, 1081-1083 (1982).

6. R. I. Laming, M. P. Gold, D. N. Payne, and N. A. Halliwell, "Fibre-optic vibration probe," Electronic Lett. 22, 167-168 (1986).

7. A. D. Kersey, A. C. Lewin, and D. A. Jackson "Pseudo-heterodyne détection for the fiber gyroscope," Electronic Lett. 20, 368-370 (1984).

8. A. Dandridge, A. B. Tveten, T. G. D. Giallorenzi, and G. Thomas, "Homodyne démodulation scheme for fiber optic sensors using phase generated carrier," IEEE J. Quantum Electron. V QE-18, 1647-1653 (1982).

9. B. Lee and Y. Jeong "Interrogation techniques for fiber grating sensors and the theory of fiber gratings," in Fiber Optic Sensors, S. Yin , P. Ruffin, F. T. S. Yu, eds. (CRC Press, Boca Raton, 2008), pp. 295-382.

10. S. Pilevar, W. A. Atia, and C. C. Davis, "Reflection near-field scanning optical microscopy: An interferometric approach," Ultramicroscopy 61, 233-236 (1995).

11. L. Stern, B. Desiatov, I. Goykhman, G. M. Lerman and U. Levy, "Near field phase mapping exploiting intrinsic oscillations of aperture NSOM probe," Opt. Express 19, 12014-12020 (2011),http://www.opticsexpress.org/abstract.cfm?URI=oe-19-13-12014.

12. B. Deutsch and R. Hillenbrand and L. Novotny, "Near-field amplitude and phase recovery using phase-shifting interferometry," Opt. Express 16, 494-501 (2008), http://www.opticsexpress.org/abstract.cfm?URI=oe-16-2-494.

13. N. Ocelic and R. Hillenbrand, "Optical device for measuring modulated signal light," WO 2007/039210 A12006

**Revendications**

1. Procédé électronique d'extraction de l'amplitude Es et de la phase Φs d'un signal électrique $I_{det}$ détecté par un détecteur, dans une détection synchrone, ledit signal électrique laet contenant une partie modulée $I_{mod}$ de la -forme $I_{mod} \propto$ Es f(t)*cos($\Phi_S$ - $\Phi_R$ (t)), où $\Phi_R$ (t) et f(t) sont deux fonctions de modulation temporelles connues, comprenant les étapes suivantes:

   - multiplier ledit signal électrique par deux signaux de références C(t) et S(t) construits à partir des fonctions de modulation temporelles connues $\Phi_R$ (t) et f(t);
   - intégrer les deux signaux résultant des deux multiplications définies à l'étape précédente durant un temps $t_{int}$;
   - déterminer l'amplitude et la phase dudit signal à partir des grandeurs X et Y résultant des intégrations définies à l'étape précédente;
   où:

   - ledit signal électrique est multiplié par deux signaux de références orthogonaux C(t) et S(t) pouvant se décomposer sur le même ensemble de fréquences que celles présentes dans $I_{mod}$ à savoir: C $\propto$ cos ($\Phi_R$)*f(t) et S $\propto$ sin ($\Phi_R$)*f(t) ; que
   - la fonction de modulation temporelle en amplitude considérée f(t) est soit périodique de période $2\pi/\Omega_A$ durant le temps d'intégration $t_{int}$, où $\Omega_A$. est la fréquence angulaire, soit constante durant le temps d'inté-gration $t_{int}$ ; que
   - la fonction de modulation temporelle en phase $\Phi_R$ (t) considérée est périodique durant le temps d'intégration $t_{int}$ de période $2\pi/\Omega$, où $\Omega$ est la fréquence ; et en ce que
   - les grandeurs X et Y sont reliées à Es*cos($\Phi_S$) et Es*sin($\Phi_S$) par deux coefficients de proportionnalité déterminés analytiquement ou numériquement.

2. Procédé électronique d'extraction, selon la revendication 1, dans lequel la fonction de modulation temporelle $\Phi_R$ (t) connue est exacte, imposée ou mesurée.

3. Procédé électronique d'extraction, selon la revendication 2, dans lequel la fonction de modulation temporelle connue $\Phi_R$ (t) est sinusoïdale.

4. Procédé électronique d'extraction, selon la revendication 2, dans lequel la fonction de modulation temporelle est triangulaire.

5. Procédé électronique d'extraction, selon l'une des revendications précédentes, où la fonction de modulation périodique f(t) considérée est réduite à une seule composante sinusoïdale de période $2\pi/\Omega_A$, sans harmonique.

6. Procédé selon la revendication 1 où le signal laet ou/et les signaux de références C(t) et S(t) sont filtrés de leur composante continue ou de certaines composantes fréquentielles juste avant l'étape de multiplication.

7. Montage interférométrique comprenant une source de lumière (11), un bras signal (1) couplé optiquement avec la source de lumière à l'aide d'un premier miroir (5) monté sur un premier cristal piézoélectrique (2) pour recevoir la lumière à partir de ladite source de lumière; un bras de référence (1') couplé optiquement avec la source de lumière (11) à l'aide d'un deuxième miroir (5') monté sur un deuxième cristal piézoélectrique (4') pour recevoir la lumière à partir de ladite source de lumière (11) ; et une détection synchrone (6), couplée optiquement auxdits bras signal (1) et bras de référence (1') pour détecter un signal électrique $I_{det}$ avec une amplitude $E_S$ et une phase Φs, pour la mise en oeuvre du procédé électronique d'extraction selon l'une des revendications 1 à 6.

8. Montage interférométrique selon la revendication 7 comprenant en outre un microscope à sonde locale.

9. Montage interférométrique selon la revendication 8 où la fréquence angulaire de modulation en amplitude $\Omega_A$ est une harmonique de la fréquence angulaire d'oscillation mécanique de la sonde locale.

10. Montage interférométrique selon l'une des revendications 8 ou 9, où la profondeur de modulation de $\Phi_R$ (t) est choisie pour filtrer la contribution de certaines composantes modulées non désirées éventuellement présentes dans ledit signal, à la fréquence angulaire $\Omega_A$ et ses harmoniques.

11. Montage interférométrique selon l'une des revendications 8 à 10 **caractérisé en ce qu'**il est apte à recueillir une information sur l'interaction locale existant entre la sonde locale et un échantillon.

12. Montage interférométrique pour l'exécution du procédé selon l'une des revendications 1 à 6 à l'aide de composants analogiques ou de cartes numériques.

13. Montage interférométrique pour l'exécution du procédé selon l'une des revendications 1 à 6 à l'aide de solutions logicielles.


**Patentansprüche**

1. Elektronisches Verfahren zum Extrahieren der Amplitude Es und der Phase $\Phi_S$ eines elektrischen Signals $I_{det}$, das in einer synchronen Detektion von einem Detektor detektiert wird, wobei das elektrische Signal $I_{det}$ einen modulierten Abschnitt $I_{mod}$ der Form $I_{mod} \propto$ Es f(t)*cos($\Phi_S$ - $\Phi_R$ (t)) enthält, wobei $\Phi_R$ (t) und f(t) zwei bekannte zeitliche Modulationsfunktionen sind, umfassend die folgenden Schritte:

   - Multiplizieren des elektrischen Signals mit zwei Referenzsignalen C(t) und S(t), die aus den bekannten zeitlichen Modulationsfunktionen $\Phi_R$ (t) und f(t) konstruiert wurden;
   - Integrieren der zwei Signale, die sich aus den zwei im vorherigen Schritt definierten Multiplikationen ergeben, während einer Zeit $t_{int}$;
   - Bestimmen der Amplitude und der Phase des Signals ausgehend von den Größen X und Y, die sich aus den im vorherigen Schritt definierten Integrationen ergeben;

   wobei:

   - das elektrische Signal mit zwei orthogonalen Referenzsignalen C(t) und S(t) multipliziert wird, die sich über denselben Satz von Frequenzen zerlegen lassen, wie sie in $I_{mod}$ vorhanden sind, nämlich: C $\propto$ cos ($\Phi_R$)*f(t) und S oc sin ($\Phi_R$)*f(t); dass
   - die betrachtete zeitliche Amplitudenmodulationsfunktion f(t) entweder während der Integrationszeit $t_{int}$ mit der Periode $2\pi/\Omega_A$ periodisch ist, wobei $\Omega_A$. die Winkelfrequenz ist, oder während der Integrationszeit $t_{int}$ konstant ist; dass
   - die betrachtete zeitliche Phasenmodulationsfunktion $\Phi_R$ (t) während der Integrationszeit $t_{int}$ mit der Periode $2\pi/\Omega$, periodisch ist, wobei $\Omega$ die Frequenz ist; und dadurch
   - die Größen X und Y durch zwei analytisch oder numerisch bestimmte Proportionalitätskoeffizienten mit Es*cos($\Phi_S$) und Es*sin($\Phi_S$) verbunden sind.

2. Elektronisches Verfahren zur Extraktion nach Anspruch 1, wobei die bekannte zeitliche Modulationsfunktion $\Phi_R$ (t) exakt, vorgeschrieben oder gemessen ist.

3. Elektronisches Verfahren zur Extraktion nach Anspruch 2, wobei die bekannte zeitliche Modulationsfunktion $\Phi_R$ (t) sinusförmig ist.

4. Elektronisches Verfahren zur Extraktion nach Anspruch 2, wobei die bekannte zeitliche Modulationsfunktion dreieckig ist.

5. Elektronisches Verfahren zur Extraktion nach einem der vorstehenden Ansprüche, wobei die betrachtete periodische Modulationsfunktion f(t) auf eine einzige Sinuskomponente mit der Periode $2\pi/\Omega_A$ ohne Oberschwingungen reduziert wird.

6. Verfahren nach Anspruch 1, wobei aus dem Signal $I_{det}$ und/oder den Referenzsignalen C(t) und S(t) unmittelbar vor dem Multiplikationsschritt ihre kontinuierliche Komponente oder bestimmte Frequenzkomponenten herausgefiltert werden.

**7.** Interferometrische Anordnung, umfassend eine Lichtquelle (11), einen Signalarm (1), der mittels eines ersten Spiegels (5), der auf einem ersten piezoelektrischen Kristall (2) angeordnet ist, mit der Lichtquelle optisch gekoppelt ist, um das Licht von der Lichtquelle zu empfangen; einen Referenzarm (1'), der mittels eines zweiten Spiegels (5'), der auf einem zweiten piezoelektrischen Kristall (4') angeordnet ist, mit der Lichtquelle (11) optisch gekoppelt ist, um das Licht von der Lichtquelle (11) zu empfangen; und eine synchrone Detektion (6), die optisch mit dem Signalarm (1) und dem Referenzarm (1') gekoppelt ist, um ein elektrisches Signal $I_{det}$ mit einer Amplitude Es und einer Phase $\Phi_S$ zu empfangen, um das elektronische Verfahren zur Extraktion nach einem der Ansprüche 1 bis 6 auszuführen.

**8.** Interferometrische Anordnung nach Anspruch 7, ferner umfassend ein Mikroskop mit lokaler Sonde.

**9.** Interferometrische Anordnung nach Anspruch 8, wobei die Winkelfrequenz der Amplitudenmodulation $\Omega_A$ eine Oberschwingung der Winkelfrequenz der mechanischen Schwingung der lokalen Sonde ist.

**10.** Interferometrische Anordnung nach einem der Ansprüche 8 oder 9, wobei die Modulationstiefe von $\Phi_R$ (t) so gewählt ist, dass der Beitrag bestimmter unerwünschter modulierter Komponenten, die möglicherweise in dem Signal vorhanden sind, aus der Winkelfrequenz $\Omega_A$ und ihren Oberschwingungen herausgefiltert werden.

**11.** Interferometrische Anordnung nach einem der Ansprüche 8 bis 10, **dadurch gekennzeichnet, dass** sie eine Information über die lokale Wechselwirkung sammeln kann, die zwischen der lokalen Sonde und einer Probe besteht.

**12.** Interferometrische Anordnung zur Ausführung des Verfahrens nach einem der Ansprüche 1 bis 6 mittels analoger Komponenten oder digitaler Karten.

**13.** Interferometrischer Aufbau zur Ausführung des Verfahrens nach einem der Ansprüche 1 bis 6 mittels Softwarelösungen.

**Claims**

**1.** Electronic method for extracting the amplitude $E_s$ and the phase $\Phi_s$ of an electrical signal $I_{det}$, detected by a sensor, in a synchronous detector, said electrical signal $I_{det}$ containing a modulated part $I_{mod}$ of the form $I_{mod} \propto E_s$ f(t)*cos($\Phi$s - $\Phi_R$ (t)), wherein $\Phi_R$ (t) and f(t) are two known temporal modulation functions, comprising the following steps:

- multiplying said electrical signal by two reference signals C(t) and S(t) constructed using the known temporal modulation functions $\Phi_R$ (t) and f(t);
- integrating the two signals resulting from the two multiplications defined in the previous step during a time $t_{int}$;
- determining the amplitude and the phase of said signal from the quantities X and Y resulting from the integrations defined in the previous step;

wherein:

- said electrical signal is multiplied by two orthogonal reference signals C(t) and S(t) that can decompose at the same set of frequencies as those present in $I_{mod}$, namely: C oc cos ($\Phi_R$)*f(t) and S oc sin ($\Phi_R$)*f(t); in that
- the temporal amplitude modulation function f(t) in question is either periodic, of the period $2\pi/\Omega_A$ during the integration time $t_{int}$, wherein $\Omega_A$ is the angular frequency, or constant during the integration time $t_{int}$; in that
- the temporal phase modulation function $\Phi_R$ (t) in question is periodic during the integration time $t_{int}$, of the period $2\pi/\Omega$, wherein $\Omega$ is the frequency; and in that
- the quantities X and Y are connected to Es*cos($\Phi_s$) and Es*sin($\Phi_s$) by two proportionality coefficients determined analytically or numerically.

**2.** Electronic extraction method according to claim 1, wherein the known temporal modulation function $\Phi_R$ (t) is exact, imposed or measured.

**3.** Electronic extraction method according to claim 2, wherein the known temporal modulation function $\Phi_R$ (t) is sinusoidal.

**4.** Electronic extraction method according to claim 2, wherein the temporal modulation function is triangular.

5. Electronic method according to any of the preceding claims, wherein the periodic modulation function f(t) in question is reduced to a single sinusoidal component of the period 2 n /$\Omega_A$, without harmonics.

6. Method according to claim 1, wherein the signal $I_{det}$ and/or the reference signals C(t) and S(t) are filtered from their continuous component or from certain frequency components just before the multiplication step.

7. Interferometric assembly, comprising a light source (11), a signal arm (1) optically coupled to the light source by means of a first mirror (5) mounted on a first piezoelectric crystal (2) for receiving light from said light source; a reference arm (1') optically coupled to the light source (11) by means of a second mirror (5') mounted on a second piezoelectric crystal (4') for receiving light from said light source (11), and a synchronous detector (6) optically coupled to said signal arm (1) and said reference arm (1') for detecting an electrical signal $I_{det}$ with an amplitude Es and a phase $\Phi_s$, for implementing the electronic extraction method according to any of claims 1 to 6.

8. Interferometric assembly according to claim 7, further comprising a scanning probe microscope.

9. Interferometric assembly according to claim 8, wherein the amplitude modulation angular frequency $\Omega_A$ is a harmonic of the mechanical oscillation angular frequency of the scanning probe.

10. Interferometric assembly according to either claim 8 or claim 9, wherein the modulation depth of $\Phi_R$ (t) is selected to filter the contribution of certain undesired modulated components which may be present in said signal at the angular frequency $\Omega_A$ and its harmonics.

11. Interferometric assembly according to any of claims 8 to 10, **characterized in that** it is able to collect information on the local interaction between the scanning probe and a sample.

12. Interferometric assembly for carrying out the method according to any of claims 1 to 6 using analog components or digital maps.

13. Interferometric assembly for carrying out the method according to any of claims 1 to 6 with the aid of software solutions.

FIG. 1

Spectre de $I_{det}$

$I_{mod} = E_s f(t) \cos(\Phi_R(t) - \Phi_s)$

Bruit

FIG. 2b

$\Omega_A$

Bandes latérales aux fréquences
$\Omega_A \pm m\Omega$

Fréquences
angulaires

FIG. 2a

$I_{det}$

$f(t), \Phi_R(t)$

C(t)

S(t)

X

X

$\int_0^{\Omega t_{int}}$

$\int_0^{\Omega t_{int}}$

Sortie $X \propto E_s \cos\Phi_s$

Sortie $Y \propto E_s \sin\Phi_s$

Détermination
de $E_s$ et $\Phi_S$

Calcul des coefficients
de proportionalité

FIG. 2c

— Spectre de C(t)
······ Spectre de S(t)

$\Omega_A$

Bandes latérales aux fréquences
$\Omega_A \pm m\Omega$

Fréquences
angulaires

EP 3 044 697 B1

FIG. 3a

FIG. 3b

FIG. 3c

FIG. 4a

FIG. 4b

EP 3 044 697 B1

21

FIG. 5

FIG. 6

FIG. 7a

FIG. 7b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007039210 A1

**Littérature non-brevet citée dans la description**

- **CHARLES B. CAMERON.** Recovering Signals from Optical Optical Fiber Interferometric Sensors. *PhD thesis,* 1991
- **N. OCELIC ; A. HUBER ; R. HILLENBRAND.** Pseudoheterodyne detection for background-free near-field spectroscopy. *Appl. Phys. Lett.,* 2006, vol. 89, 101124
- **S. YIN ; P. RUFFIN ; F. T. S. YU.** Fiber Optic Sensors. CRC Press, 2008
- **P. S. CARNEY ; B. DEUTSCH ; A. A. GOVYADINOV ; R. HILLENBRAND.** Phase in nanooptics. *ACS Nano*
- **N. OCELIC ; A. HUBER ; R. HILLENBRAND.** *Pseudoheterodyne détection for background-free near-field spectroscopy,*
- **M. VAEZ-IRAVANI ; R. TOLEDO-CROW.** Phase contrast and amplitude pseudoheterodyne interference near field scanning optical microscopy,. *Appl. Phys. Lett.,* 1993, vol. 62, 1044-1046
- **D. A. JACKSON ; A. D. KERSEY ; M. CORKE ; J. D. C. JONES.** Pseudoheterodyne détection scheme for optical interferometers,. *electronic lett.,* 1982, vol. 18, 1081-1083
- **R. I. LAMING ; M. P. GOLD ; D. N. PAYNE ; N. A. HALLIWELL.** Fibre-optic vibration probe,. *Electronic Lett.,* 1986, vol. 22, 167-168
- **A. D. KERSEY ; A. C. LEWIN ; D. A. JACKSON.** Pseudo-heterodyne détection for the fiber gyroscope,. *Electronic Lett.,* 1984, vol. 20, 368-370
- **N. OCELIC ; A. HUBER ; R. HILLENBRAND.** Pseudoheterodyne détection for background-free near-field spectroscopy. *Appl. Phys. Lett.,* 2006, vol. 89, 101124
- **STUTT, C.A.** Low-frequency spectrum of lock-in amplifiers. *MIT Technical Report (MIT),* Mars 1949, vol. 105, 1-18
- **SCOFIELD, JOHN H.** Frequency-domain description of a lock-in amplifier. *American Journal of Physics (AAPT),* Février 1994, vol. 62 (2), 129-133
- **CAMERON C. B.** Recovering signals from Optical fiber Interferometric sensors. *PhD thesis,* 1991

- **P. S. CARNEY ; B. DEUTSCH ; A. A. GOVYADINOV ; R. HILLENBRAND.** Phase in nanooptics. *ACS Nano,* 2012, vol. 6, 8-12
- **N. OCELIC ; A. HUBER ; AND R. HILLENBRAND.** Pseudoheterodyne détection for background-free near-field spectroscopy. *Appl. Phys. Lett.,* 2006, vol. 89, 101124
- **M. VAEZ-IRAVANI ; R. TOLEDO-CROW.** Phase contrast and amplitude pseudoheterodyne interférence near field scanning optical microscopy. *Appl. Phys. Lett.,* 1993, vol. 62, 1044-1046
- **D. A. JACKSON ; A. D. KERSEY ; M. CORKE ; J. D. C. JONES.** Pseudoheterodyne détection scheme for optical interferometers. *electronic lett.,* 1982, vol. 18, 1081-1083
- **R. I. LAMING ; M. P. GOLD ; D. N. PAYNE ; N. A. HALLIWELL.** Fibre-optic vibration probe. *Electronic Lett.,* 1986, vol. 22, 167-168
- **A. D. KERSEY ; A. C. LEWIN ; D. A. JACKSON.** Pseudo-heterodyne détection for the fiber gyroscope. *Electronic Lett.,* 1984, vol. 20, 368-370
- **A. DANDRIDGE ; A. B. TVETEN ; T. G. D. GIALLORENZI ; G. THOMAS.** Homodyne démodulation scheme for fiber optic sensors using phase generated carrier. *IEEE J. Quantum Electron.,* 1982, vol. QE-18, 1647-1653
- Interrogation techniques for fiber grating sensors and the theory of fiber gratings. **B. LEE ; Y. JEONG.** Fiber Optic Sensors. CRC Press, 2008, 295-382
- **S. PILEVAR ; W. A. ATIA ; C. C. DAVIS.** Reflection near-field scanning optical microscopy: An interferometric approach. *Ultramicroscopy,* 1995, vol. 61, 233-236
- **L. STERN ; B. DESIATOV ; I. GOYKHMAN ; G. M. LERMAN ; U. LEVY.** Near field phase mapping exploiting intrinsic oscillations of aperture NSOM probe. *Opt. Express,* 2011, vol. 19, 12014-12020, http://www.opticsexpress.org/abstract.cfm?URI=oe-19-13-12014
- **B. DEUTSCH ; R. HILLENBRAND ; L. NOVOTNY.** Near-field amplitude and phase recovery using phase-shifting interferometry. *Opt. Express,* 2008, vol. 16, 494-501, http://www.opticsexpress.org/abstract.cfm?URI=oe-16-2-494